# EUROPEAN PATENT SPECIFICATION

(11) **EP 2 507 778 B1**
(45) Date of publication and mention of the grant of the patent: **04.05.2016**
(21) Application number: 10834283.3
(22) Date of filing: 07.12.2010
(51) Int. Cl.: G08C 17/02, H04B 1/38, H04B 1/59, G01K 1/02, H04Q 9/00

(54) **ARRANGEMENT FOR PERFORMING A MEASUREMENT, RFID MODULE AND SENSOR MODULE**
ANORDNUNG ZRU DURCHFÜHRUNG EINER MESSUNG, RFID-MODUL UND SENSORMODUL
DISPOSITIF DESTINÉ À RÉALISER UNE MESURE, MODULE RFID ET MODULE CAPTEUR

(30) Priority: 04.12.2009 FI 20096287
(43) Date of publication of application: 10.10.2012
(73) Proprietor: Sensire Oy, 80100 Joensuu (FI)
(72) Inventor: ASIKAINEN, Jukkapekka, FI-80110 Joensuu (FI)
(74) Representative: IPR Partners Ltd
(86) International application number: PCT/FI2010/051002
(87) International publication number: WO 2011/067474

(56) References cited:
- WO-A2-2007/019104
- US-A1- 2002 139 174
- US-A1- 2003 137 968
- US-A1- 2005 248 455
- US-A1- 2009 171 163

## Description

### FIELD OF INVENTION

The invention relates to an arrangement for performing a measurement. Additionally, the invention relates to an RFID module and a sensor module usable in the arrangement.

### BACKGROUND

Arrangements are known from the prior art for e.g. measuring conditions of environment with sensors, the measurement data of which is read with an RFID function. Often the RFID function is integrated directly to sensor performing the measurement, such as in the solution disclosed in publication US 2005/0248455A1, in which the solution includes a sensor and an RFID transponder i.e. a transmitter for transmitting a characterizing ID. Alternatively, the sensor can be connected to an RFID unit with a separate control module, such as in the solution disclosed in publication US 2007/0109121 A1, or by connecting with wired or wireless manner.

Another arrangement is also disclosed in publication US 2003/0137968.

However, some problems are related to the prior art solutions. For example, an RFID sensor is typically restricted to measuring just certain quantities, like e.g. an acceleration sensor only measures acceleration and an RFID pressure sensor only measures pressure. In targets, where several quantities must be measured, several separate RFID sensors are thus needed. This may bring a problem relating to limitations of the frequency band assigned to the RFID technology. Additionally, simultaneous usage of several RFID functionalities causes higher energy consumption. In a wide usage, this is a negative feature also for environment. It may also appear to be a problem to add RFID sensors which measure other quantities to a system at a later stage if the system already includes RFID sensors because the RFID functionalities of the RFID sensors may differ from each other.

### SUMMARY OF THE INVENTION

It is an objective of the invention to provide such a solution in which the above mentioned problems of the prior art can be reduced. Especially, the invention aims to solve how a system with measurement sensors could be easily modified for different kinds of measurement purposes.

The objectives of the invention are obtained with an RFID module and a sensor module, wherein the RFID module has data transfer means, memory means, a power supply (power source) and interface means. Additionally, the RFID module also has a microcontroller, which functionally interconnects the data transfer means, memory means, power supply and the interface means and controls their operation. The sensor module has a sensor for measuring at least one quantity, interface means and a microcontroller, which functionally interconnects the sensor and the interface means and controls their operation.

In accordance with the invention, the interface means of the RFID module and the sensor module are both physically and functionally compatible with each other. Further, the RFID module and the sensor module have been adapted into a detachably connectable functional modular structure through said interface means in such a manner that the sensor module is adapted to deliver data measured by the sensor to the RFID module via the interface means, and the RFID module is further adapted to deliver said data measured by the sensor through a short range data transfer connection.

The arrangement according to the invention is characterized by what is disclosed in the characterizing part of claim 1.

The RFID module according to the invention is characterized by what is disclosed in the characterizing part of claim 7.

The sensor module according to the invention is characterized by what is disclosed in the characterizing part of claim 10.

Some preferable embodiments are disclosed in the dependent claims.

The RFID module is most preferably an active RFID module, which has an internal current supply, and its data transfer means is preferably a receiver/transmitter means based on data transfer on radio waves. With an internal power supply it is possible to achieve a larger operating radius compared to a passive module. An internal power supply also makes it possible to provide an extended functionality, including the storage of data in an internal memory of an RFID module (such as ROM, WORM). An active RFID module has also typically a longer operating range and a larger memory means than passive modules. Additionally, active RFID modules may also store data transmitted by the receiver/transmitter into memory means.

According to one embodiment the RFID module is adapted to provide current to a sensor module which has been connected to the interface means of the RFID module. The current supply of the RFID module may be e.g. a changeable, disposable battery or a rechargeable battery. The current delivery feature of the invention offers clear advantages, such as that a current supply is required in just one module. It is preferable to provide the current supply in the RFID module especially if, according to one embodiment, the sensor module does not function independently but requires an RFID module and its data transfer means for external reading and transferring the data measured by the sensor.

According to one embodiment of the invention the sensor module also comprises at least one second interface means, whereby said sensor module can be connected with at least one second sensor module, which has compatible interface means for connecting the sensor modules detachably. This kind of a sensor module is preferably adapted to provide current from an RFID module connected to the sensor module to said second sensor module. On the other hand, the sensor module according to the embodiment of the invention is adapted to convey data measured by the second sensor module to the RFID module via said interface means.

According to one aspect of the invention several sensor modules can be connected to each other. In this case sensor modules are adapted to deliver current from the RFID module to a next further sensor module connected to the sensor module via interface means. On the other hand, sensor modules are also adapted to convey measurement data of a sensor of a further sensor module for delivering the data to the RFID module through said interface means.

According to one embodiment of the invention an RFID module comprises location means, such as a GPS receiver, whereby the location information is achieved in the RFID module independently on the type of the used sensor module. Thus RFID module may, according to one embodiment, function independently as an active RFID tag, delivering e.g. only location data and ID data, by which the RFID module can be identified.

In a sensor module according to the invention the sensor can be any sensor according to prior art, such as a sensor which is adapted to measure temperature, pressure, illumination, acceleration, intensity of radiation, infrared radiation, humidity, magnetic field or sound, for example. However, these are just examples, and a sensor module according to the invention is not limited to these, but a person skilled in the art can replace the sensor with any known sensor without changing the inventive idea.

According to one preferable embodiment the sensor modules are both structurally and in their electric interface features similar so that it is possible to form a structure of sensor modules wherein all necessary sensors/sensor modules are connected to an RFID module.

The invention thus offers clear advantages compared to prior art solutions. For example, in planning the arrangement it is not necessary to know which all quantities are required to be measured with the arrangement, but according to the invention several sensor modules can be linked to each other, whereby at least one of the sensor modules is linked with the RFID module. For example, sensor modules with different kinds of sensors can be freely added and removed without a need for a specific configuration or programming the arrangement. Additionally, the connection of the modules is made with standard type interface means with a "plug and play" principle. Said interface means preferably functions both as a mechanical and electrical element connecting the modules, through which interface e.g. the data transfer from one sensor module to another and further to an RFID module is adapted to be made. According to one preferable embodiment the modules can be connected and disconnected with each other manually without tools.

According to the invention the interface means have been adapted e.g. physically such that by connecting two modules to each other, such as an RFID module with a sensor module, or a sensor module with another sensor module, it is possible to provide a both functionally and structurally uniform modular entity. In this kind of a modular structure the modules can be combined functionally and physically without a need for any separate cables or wiring between the modules, but the electrical connection, i.e. data transfer and power supply, as well as the physical connection can be implemented through said interface means which are arranged with a fixed attachment in the modules.

The arrangement according to the invention also requires and uses less frequency band for data transfer because it is possible to use even just one RFID module and thus only one frequency band (such as 868 MHz), whereby it is also more simple to read the data from the arrangement when compared to using several RFID tags.

The enclosure of the RFID module preferably substantially encloses other parts of the RFID module. However, this means that the enclosure still has functionally required apertures for interface means, for example. The enclosure of the sensor module preferably substantially encloses other parts of the sensor module. However, this means that the enclosure still has functionally required apertures for interface means, for example, and possibly for the sensor in order to facilitate sensing the quantity to be measured from the environment. The enclosures of the modules facilitate an easy assembly of the measurement arrangements and protect the electronics of the modules.

### BRIEF DESCRIPTION OF FIGURES

In the next part preferable embodiments of the invention are disclosed in more detail with reference to the enclosed Figures, wherein
- Figure 1: illustrates an exemplary arrangement comprising an RFID module and a sensor module according to a preferable embodiment of the invention,
- Figure 2: illustrates an exemplary sensor module structure according to a preferable embodiment of the invention, and
- Figure 3: illustrates an exemplary arrangement, which comprises several sensor modules according to a preferable embodiment of the present invention.

### DETAILED DESCRIPTION OF FIGURES

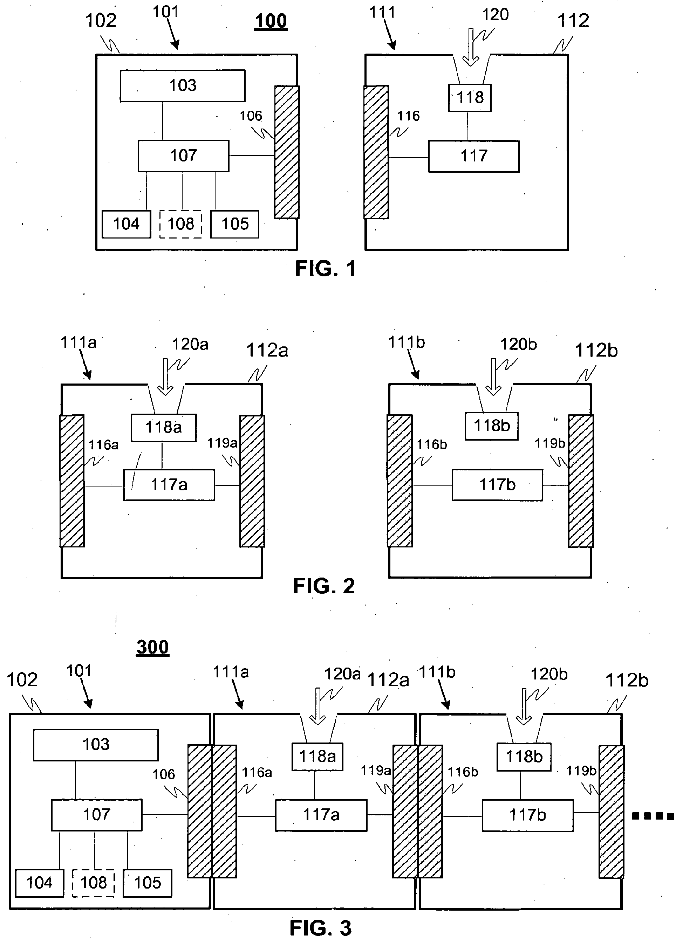

Figure 1 illustrates an exemplary arrangement 100 comprising an RFID-module 101 and a sensor module 111 for performing a measurement in accordance with a preferable embodiment of the invention.

The RFID module 101 of the arrangement comprises an enclosure 102, a data transfer means 103 supported by the base for providing short range data transfer connection memory means 104, current supply 105, such as e.g. changeable battery or rechargeable battery, and interface means 106. According to one embodiment the data transfer means 103 is a radio receiver/transmitter. Additionally, the RFID module also comprises a micro-controller 107, which functionally connects the data transfer means 103, the memory means 104, the current supply 105, and the interface means 106, as well controls their operation in such a way that it is possible to provide data transfer from the interface means 107 to the memory means 104 and/or to data transfer means 103, as well as data transfer from the memory means 104 to the data transfer means 103. Further, the microcontroller 107 may also control current supply to the components of the RFID module and especially the current supply from the current supply to the interface means 106. By the control of the power supply it is possible, for example, to switch off power from certain components on selected time periods in order to reduce average power consumption of a module/modules.

The enclosure of the RFID module preferably substantially encloses other parts of the RFID module. However, this means that the enclosure still has functionally required apertures for interface means, for example.

The sensor module 111 comprises an enclosure 112, a sensor 118 supported by the base for measuring at least one quantity 120, such as illumination, pressure, temperature or magnetic field, however, without any restriction to these. Additionally, the sensor module 111 comprises interface means 116 and a microcontroller 116 for controlling the measurement procedures and data transfer, for example. The microcontroller may also control current supply bye e.g. performing measurements in a non-continuous manner and switching off the power from the sensor during other periods.

The enclosure of the sensor module preferably substantially encloses other parts of the sensor module. However, this means that the enclosure still has functionally required apertures for interface means, for example, and possibly for the sensor in order to facilitate sensing the quantity to be measured from the environment.

The interface means 106, 116 of the RFID module 101 and the sensor module 111 are both physically and functionally compatible with each other so that the RFID module and the sensor module can be connected to each other detachably, preferably manually without any tools, into a unitary functional module entity via the interface means 106, 116. The sensor module 111 is adapted to convey the data measured by the sensor 118 to the RFID module 101 through said interface means 106, 116. The data transfer from the sensor 118 to the interface means 116 is preferably controlled by the microcontroller 117 of the sensor module 111. The RFID module 101 is further adapted to transmit said data measured by the sensor 118 via short range data transfer connection by using data transfer means 103, such as radio receiver/transmitter, for example.

It should further be noted that the RFID module 101 is adapted to supply current to said sensor module 111 from the current supply 105 of the RFID module 101 via interface means 106, 116. In the sensor module 111 the microcontroller 117 preferably controls the current supply from the interface means 116 to the sensor 118 measuring a quantity.

According to one embodiment of the invention the RFID module 101 may also comprise location means 108, whereby the arrangement obtains location information independently of the type of the sensor module 111. However, it should be noted that the location means is an optional alternative, and that the idea to combine an RFID module and a sensor module into a functional entity can also be implemented without location means. It should further be noted that the RFID module may comprise an ID data, whereby it can be identified, and the data delivered by the RFID module can be combined with the exact arrangement comprising said RFID module.

Figure 2 illustrates an exemplary sensor module structure 111a, 111b according to a preferable embodiment of the present invention, wherein the sensor module 111 a, 111 b comprises at least one second interface means 119a, 119b in addition to a first interface means 116a, 116b. By using the interface means 116a, 116b, 119a, 119b it is possible, for example, to connect the sensor module 111a with both an RFID module and with at least one second sensor module 111b, as illustrated in Figure 3.

Figure 3 illustrates an exemplary arrangement 300 according to a preferable embodiment, which arrangement comprises several sensor modules 111 a, 111 b, and wherein a first sensor module 111 a is connected physically and functionally to an RFID module 101 with interface means 106, 116a. Additionally, the first sensor modulel 111a is connected physically and functionally to a second sensor module 111b through interface means 119a of the first sensor module 111a and through interface means 116b of the second sensor module 111b. It is clear that it is possible to connect still some third sensor module to the sensor module 111b. According to the general idea of an embodiment of the invention it is possible to chain several sensor modules 111 to each other.

In the arrangement 300 the RFID module is adapted to supply current to the sensor module 111 a through interface means 106, 116a which connect these modules. The current supply may be controlled by the microcontroller 107. Additionally, the sensor module 111a is adapted to supply current to the second sensor module 111b through interface means 119a, 116b, which connect said sensor modules 111a, 111b. The first sensor module 111a is further adapted to convey data measured by the sensor 118b of the second sensor module 111b to the RFID module 101 both through interface means 119a, 116b connecting the sensor modules 111a, 111b, and through interface means 106, 116a connecting the first sensor module 111a and the RFID module 101. This data transfer is preferably controlled by the microcontrollers 107, 117a, 117b. It should be noted that, according to an embodiment of the invention, each chained sensor module can be adapted to function according to the sensor module 111a serving as an intermediary both in supplying current and in conveying measurement data.

The RFID module 101 is adapted to receive data measured by the sensor 108a of the sensor module 111a, which sensor module is connected to the RFID module. The RFID module is also adapted to receive from the sensor module 111 a measurement data supplied by another sensor module 111b. The measurement data supplied by the sensor module 111b can be data measured by a sensor 108b of the sensor module 111b and/or the measurement data may be supplied by some third sensor module which is connected to the sensor module 111 b. The reception of the data to the RFID module is preferably controlled by the microcontroller 107.

The RFID module 101 may, under the control of the microcontroller 107, store at least part of the received measurement data into memory means 104 and/or deliver it via the data transfer means 103, for example, to external party which may read the data. According to one embodiment, the RFID module may also deliver ID data and/or location data if the RFID module 101 also comprises location means 108, such as a GPS receiver.

According to the arrangement 300 of Figure 3 the measurement arrangement can be extended by connecting several sensor modules 111a, 111b, to each other, such as sensor modules measuring different quantities/magnitudes 120a, 120b. The sensor module 111 a may comprise, for example, a pressure sensor 118a for measuring pressure and the sensor modules 111 b may comprise, for example, a temperature sensor '118for measuring temperature.

Above, only some embodiments of the solution according to the invention have been described. The principle of the invention can naturally be modified within the scope of protection defined by the patent claims, for example, relating to the details of the implementation and areas of use. It should especially be noted that even if all bases 112, 112a, 112b of the sensor modules are shown as same size, the size of the base does not have meaning in terms of the general idea of the invention. It is thus possible, for example, to provide larger bases for larger or special purpose sensors, which still have the interface means and other components and functions according to the present invention. It should also be noted that according to one embodiment a sensor module may comprise more than one sensor. Also in this case, in terms of the general idea of the invention, it is essential that the sensor module comprises interface means according to the invention as well as other components and functions.

## Claims

1. Arrangement (300) for performing a measurement and for delivering data of the measurement through a short range data transfer connection, wherein the arrangement comprises an active RFID module (101) and a sensor module (111a, 111b), and wherein
- the RFID module (101) comprises an enclosure (102), radio receiver/transmitter means (103), memory means (104), current supply (105), interface means (106) a microcontroller (107), which functionally connects at least the data transfer means, the memory means, and the interface means, and an enclosure (102), which substantially encloses said other parts of the RFID module;
- the sensor module (111) comprises an enclosure (112), a sensor (118) for measuring at least one quantity, interface means (116), and a microcontroller (117), which functionally connects said sensor and said interface means,
- said interface means (106, 116) of the RFID module and the sensor module are both physically and functionally compatible with each other, the arrangement being further **characterized in that**
- the RFID-module and the sensor module are adapted to be detachable connectable to each other into a functional module entity via said interface means such that the sensor module (111) is adapted to convey data measured by the sensor (118) to the RFID module (101) through said interface means (106, 116) and the RFID module is further adapted to deliver said data measured by the sensor via a short range data transfer connection (103).

2. Arrangement according to claim 1, wherein the enclosure of the RFID module substantially encloses the other parts of the RFID module, and the enclosure of the sensor module substantially encloses the other parts of the sensor module.

3. Arrangement according to claim 1 or 2, wherein the RFID module (101) is adapted to supply current to said sensor module (111, 111a, 111b) through said interface means (106, 116, 116a).

4. Arrangement according to any preceding claim, wherein a first sensor module (111a) further comprises at least one second interface means (119a) for connecting said first sensor module (111 a) with the at least one second sensor module (111b), whereby said first sensor module (111a) is adapted to supply current from an RFID module (101) which is connected to the first sensor module (111a) to said second sensor module (111b), and adapted to convey data measured by a sensor (118b) of said second sensor module (11b) to the RFID module (101) through said interface means (106, 116a, 116b, 119a).

5. Arrangement according to any preceding claim, wherein the RFID module comprises location means (108).

6. Arrangement according to any preceding claim, wherein the sensor (118, 118a, 118b) of the sensor module is adapted to measure at least one of the following quantities: temperature, pressure, illumination, acceleration, intensity of radiation, infrared radiation, humidity, magnetic field, or sound.

7. Active RFID module (101) adapted to an arrangement according to claim 1, wherein the RFID module comprises an enclosure (102), radio receiver/transmitter means (103), memory means (104), current supply (105), interface means (106), and a microcontroller (107), which functionally connects the data transfer means, the memory means, and the interface means, and wherein said interface means (106) is both physically and functionally compatible with interface means (116, 116a, 116b) of a sensor module (111, 111 a, 111 b), which is detachably connectable with the RFID module.

8. RFID module according to claim 7, wherein the enclosure of the RFID module substantially encloses the other parts of the RFID module.

9. RFID module according to claim 7 or 8, wherein the RFID module is adapted to supply current through the interface means (106, 106a) to a sensor module (111a), which is connected to the interface means (106).

10. Sensor module (111, 111a, 111b) adapted to an arrangement according to claim 1, wherein the sensor module comprises an enclosure (112), a sensor (118, 118a, 118b) for measuring at least one quantity, interface means (116, 116a, 119a, 116b, 119b), and a microcontroller (117, 117a, 117b), which functionally connects said sensor and said interface means, and wherein said interface means (116, 116a, 116b) is both physically and functionally compatible with interface means (106) of an RFID module (101), which is detachably connectable with the sensor module.

11. Sensor module according to claim 10, wherein the enclosure of the sensor module substantially encloses the other parts of the sensor module.

12. Sensor module according to claim 10 or 11, wherein the sensor module (111a) further comprises at least one second interface means (119a) for connecting said sensor module (111a) with at least one second sensor module (111 b), whereby said sensor module (111 a) is adapted to supply current from an RFID module (101), which is connected to the first sensor module (111a), to said second sensor module (111b), and adapted to convey data measured by a sensor (118b) of said second sensor module (111 b) to the RFID module (101) through said interface means (106, 116a, 116b, 119a).

## Patentansprüche

1. Anordnung (300) zur Durchführung einer Messung und zur Lieferung von Daten der Messung über eine Kurzstrecken-Datenübertragungsverbindung, wobei die Anordnung ein aktives RFID-Modul (101) und ein Sensormodul (111a, 111b) aufweist und wobei
- das RFID-Modul (101) ein Gehäuse (102), Funkempfänger-/Sendermittel (103), Speichermittel (104), Stromversorgung (105), Schnittstellenmittel (106), einen Mikrocontroller (107), der mindestens das Datenübertragungsmittel, das Speichermittel und das Schnittstellenmittel funktional verbindet, und ein Gehäuse (102), das im Wesentlichen die anderen Teile des RFID-Moduls umschließt, aufweist;
- das Sensormodul (111) ein Gehäuse (112), einen Sensor (118) zum Messen mindestens einer Menge, Schnittstellenmittel (116) und einen Mikrocontroller (117), der den Sensor und die Schnittstellenmittel funktional verbindet, aufweist,
- die Schnittstellenmittel (106, 116) des RFID-Moduls und des Sensormoduls sowohl physisch als auch funktional miteinander kompatibel sind, wobei die Anordnung ferner **dadurch gekennzeichnet ist, dass**
- das RFID-Modul und das Sensormodul dazu ausgebildet sind, um über das Schnittstellenmittel trennbar miteinander zu einer funktionalen Moduleinheit verbunden werden zu können, so dass das Sensormodul (111) ausgebildet ist zur Übertragung von Daten, die von dem Sensor (118) gemessen werden, über das Schnittstellenmittel (106, 116) an das RFID-Modul (101) und das RFID-Modul ferner ausgebildet ist zur Lieferung der von dem Sensor gemessenen Daten über eine Kurzstrecken-Datenübertragungsverbindung (103).

2. Anordnung nach Anspruch 1, wobei das Gehäuse des RFID-Moduls im Wesentlichen die anderen Teile des RFID-Moduls umschließt und das Gehäuse des Sensormoduls im Wesentlichen die anderen Teile des Sensormoduls umschließt.

3. Anordnung nach Anspruch 1 oder 2, wobei das RFID-Modul (101) ausgebildet ist zur Lieferung von Strom über die Schnittstellenmittel (106, 116, 116a) an das Sensormodul (111, 111a, 111b).

4. Anordnung nach einem der vorhergehenden Ansprüche, wobei ein erstes Sensormodul (111a) ferner mindestens ein zweites Schnittstellenmittel (119a) zum Verbinden des ersten Sensormoduls (111a) mit dem mindestens einen zweiten Sensormodul (111b) aufweist, wobei das erste Sensormodul (111a) ausgebildet ist zur Lieferung von Strom von einem RFID-Modul (101), das mit dem ersten Sensormodul (111a) verbunden ist, an das zweite Sensormodul (111b) und das ausgebildet ist zur Übertragung von Daten, die von einem Sensor (118b) des zweiten Sensormoduls (111b) gemessen werden, über die Schnittstellenmittel (106, 116a, 116b, 119a) an das RFID-Modul (101).

5. Anordnung nach einem der vorhergehenden Ansprüche,wobei das RFID-Modul Lokalisierungsmittel (108) aufweist.

6. Anordnung nach einem der vorhergehenden Ansprüche, wobei der Sensor (118, 118a, 118b) des Sensormoduls ausgebildet ist zum Messen von mindestens einer der folgenden Mengen: Temperatur, Druck, Beleuchtung, Beschleunigung, Strahlungsintensität, Infrarotstrahlung, Feuchtigkeit, Magnetfeld oder Schall.

7. Aktives RFID-Modul (101), das für eine Anordnung nach Anspruch 1 ausgebildet ist, wobei das RFID-Modul ein Gehäuse (102), Funkempfänger-/Sendermittel (103), Speichermittel (104), Stromversorgung (105), Schnittstellenmittel (106) und einen Mikrocontroller (107), der das Datenübertragungsmittel, das Speichermittel und das Schnittstellenmittel funktional verbindet, aufweist, und wobei das Schnittstellenmittel (106) sowohl physisch als auch funktional mit Schnittstellenmitteln (116, 116a, 116b) eines Sensormoduls (111, 111a, 111b), das trennbar mit dem RFID-Modul verbunden werden kann, kompatibel ist.

8. RFID-Modul nach Anspruch 7, wobei das Gehäuse des RFID-Moduls im Wesentlichen die anderen Teile des RFID-Moduls umschließt.

9. RFID-Modul nach Anspruch 7 oder 8, wobei das RFID-Modul ausgebildet ist zur Lieferung von Strom über die Schnittstellenmittel (106, 106a) an ein Sensormodul (111a), das mit dem Schnittstellenmittel (106) verbunden ist.

10. Sensormodul (111, 111a, 111b), das für eine Anordnung nach Anspruch 1 ausgebildet ist, wobei das Sensormodul ein Gehäuse (112), einen Sensor (118, 118a, 118b) zum Messen mindestens einer Menge, Schnittstellenmittel (116, 116a, 119a, 116b, 119b) und einen Mikrocontroller (117, 117a, 117b), der den Sensor und die Schnittstellenmittel funktional verbindet, aufweist, und wobei das Schnittstellenmittel (116, 116a, 116b) sowohl physisch als auch funktional mit Schnittstellenmitteln (106) eines RFID-Moduls (101), das trennbar mit dem Sensormodul verbunden werden kann, kompatibel ist.

11. Sensormodul nach Anspruch 10, wobei das Gehäuse des Sensormoduls im Wesentlichen die anderen Teile des Sensormoduls umschließt.

12. Sensormodul nach Anspruch 10 oder 11, wobei das Sensormodul (111a) ferner mindestens ein zweites Schnittstellenmittel (119a) zum Verbinden des Sensormoduls (111a) mit mindestens einen zweiten Sensormodul (111b) aufweist, wobei das Sensormodul (111a) ausgebildet ist zur Lieferung von Strom von einem RFID-Modul (101), das mit dem ersten Sensormodul (111a) verbunden ist, an das zweite Sensormodul (111b), und das ausgebildet ist zur Übertragung von Daten, die von einem Sensor (118b) des zweiten Sensormoduls (111b) gemessen werden, über das Schnittstellenmittel (106, 116a, 116b, 119a) an das RFID-Modul (101).

## Revendications

1. Dispositif (300) pour effectuer une mesure et pour délivrer les données de la mesure par l'intermédiaire d'une connexion de transfert de données à courte portée, dans lequel le dispositif comprend un module RFID actif (101) et un module de capteur (111a, 111b) et dans lequel
- le module RFID (101) comprend un boîtier (102), un moyen d'émetteur/récepteur radio (103), un moyen de mémoire (104), une alimentation électrique (105), un moyen d'interface (106), un microcontrôleur (107), laquelle fonctionnalité connecte au moins le moyen de transfert de données, le moyen de mémoire et le moyen d'interface et un boîtier (102), qui renferme substantiellement lesdites autres parties du module RFID ;
- le module de capteur (111) comprend un boîtier (112), un capteur (118) pour mesurer au moins une quantité, un moyen d'interface (116) et un microcontrôleur (117), laquelle fonctionnalité connecte ledit capteur et ledit moyen d'interface ;
- ledit moyen d'interface (106, 116) du module RFID et le module de capteur sont tous deux physiquement et fonctionnellement compatibles l'un avec l'autre, l'agencement étant en outre **caractérisé en ce que**
- le module RFID et le module de capteur sont adaptés afin d'être connectables de manière amovible l'un à l'autre en une entité de module fonctionnel via ledit moyen d'interface de sorte que le module de capteur (111) soit adapté pour transporter les données mesurées par le capteur (118) vers le module RFID (101) par l'intermédiaire dudit moyen d'interface (106, 116) et le module RFID est en outre adapté afin de délivrer lesdites donnés mesurées par le capteur via une connexion de transfert de données à courte portée (103).

2. Dispositif selon la revendication 1, dans lequel le boîtier du module RFID renferme substantiellement les autres parties du module RFID et le boîtier du module de capteur renferme substantiellement les autres parties du module de capteur.

3. Dispositif selon la revendication 1 ou 2, dans lequel le module RFID (101) est adapté afin d'alimenter électriquement ledit module de capteur (111, 111a, 111b) par l'intermédiaire dudit moyen d'interface (106, 116, 116a).

4. Dispositif selon une quelconque des revendications précédentes, dans lequel un premier module de capteur (111a) comprend en outre au moins un second moyen d'interface (119a) pour connecter ledit premier module de capteur (111a) avec au moins un second module de capteur (111b), moyennant quoi ledit premier module de capteur (111a) est adapté afin d'alimenter électriquement à partir d'un module RFID (101) qui est connecté au premier module de capteur (111a) dans ledit second module de capteur (111b), et adapté afin de transporter les données mesurées par un capteur (118b) dudit second module de capteur (111b) vers le module RFID (101) par l'intermédiaire dudit moyen d'interface (106, 116a, 116b, 119a).

5. Dispositif selon une quelconque des revendications précédentes, dans lequel le module RFID comprend un moyen de localisation (108).

6. Dispositif selon une quelconque des revendications précédentes, dans lequel le capteur (118, 118a, 118b) du module de capteur est adapté afin de mesurer au moins une des quantités suivantes : température, pression, illumination, accélération, intensité de rayonnement, rayonnement infrarouge, humidité, champ magnétique ou son.

7. Module RFID actif (101) adapté à un dispositif selon la revendication 1, dans lequel le module RFID comprend un boîtier (102), un moyen d'émetteur/récepteur radio (103), un moyen de mémoire (104), une alimentation électrique (105), un moyen d'interface (106), un microcontrôleur (107), qui connecte fonctionnellement le moyen de transfert de données, le moyen de mémoire et le moyen d'interface et dans lequel ledit moyen d'interface (106) est à la fois physiquement et fonctionnellement compatible avec le moyen d'interface (116, 116a, 116b) d'un module de capteur (111, 111a, 111b) qui est connectable de manière amovible au module RFID.

8. Module RFID selon la revendication 7, dans lequel le boîtier du module RFID renferme substantiellement les autres parties du module RFID.

9. Module RFID selon la revendication 7 ou 8, dans lequel le module RFID est adapté afin d'alimenter du courant par l'intermédiaire du moyen d'interface (106, 106a) dans un module de capteur (111a), qui est connecté au moyen d'interface (106).

10. Module de capteur (111, 111a, 111b) adapté à un dispositif selon la revendication 1, dans lequel le module de capteur comprend un boîtier (112), un capteur (118, 118a, 118b) pour mesurer au moins une quantité, un moyen d'interface (116, 116a, 119a, 116b, 119b) et un microcontrôleur (117, 117a, 117b) qui connecte fonctionnellement ledit capteur et ledit moyen d'interface et dans lequel ledit moyen d'interface (116, 116a, 116b) est à la fois physiquement et fonctionnellement compatible avec le moyen d'interface (106) d'un module RFID (101), qui est connectable de manière amovible au module de capteur.

11. Module de capteur selon la revendication 10, dans lequel le boîtier du module de capteur renferme substantiellement les autres parties du module de capteur.

12. Module de capteur selon la revendication 10 ou 11, dans lequel le module de capteur (111a) comprend en outre au moins un second moyen d'interface (119a) pour connecter ledit module de capteur (111a) à au moins un second module de capteur (111b), moyennant quoi ledit module de capteur (111a) est adapté afin d'alimenter en courant à partir d'un module RFID (101), qui est connecté au premier module de capteur (111a), dans ledit second module de capteur (111b) et adapté afin de transporter les données mesurées par un capteur (118b) dudit second module de capteur (111b) vers le module RFID (101) par l'intermédiaire dudit moyen d'interface (106, 116a, 116b, 119a).
